# EUROPEAN PATENT APPLICATION

(11) **EP 2 693 693 A1**
(43) Date of publication of application: **05.02.2014**
(21) Application number: 12194956.4
(22) Date of filing: 30.11.2012
(51) Int. Cl.: H04L 12/28

(54) **Home electric appliance control apparatus, home electric appliance control system, and home electric appliance control method**

(30) Priority: 02.08.2012 JP 2012171918
(71) Applicant: Toshiba Lighting & Technology Corporation, Yokosuka-shi Kanagawa 237-8510 (JP)
(72) Inventor: YAMASHITA, Makoto, Kanagawa, 237-8510 (JP); YAMAMOTO, Takayuki, Kanagawa, 237-8510 (JP)
(74) Representative: Willquist, Sofia Ellinor

(57) **Abstract**

A home electric appliance control apparatus (10) communicates with a server that manages information about electric appliances in the home, and includes a detecting unit (14) configured to detect whether a power supply source supplying power to the electric appliances is an external power transmission network (80) or a backup power supply (30), a first communication unit (11) configured to access an external network via a network connecting apparatus that receives power from the external power transmission network, a second communication unit (12) configured to access the external network via a terminal that can operate without receiving the power, a selecting unit (15) configured to select the first or the second communication unit according to the detected power supply source , and a control unit (17) configured to control the first or the second communication unit as selected to transmit information about the home electric appliance to the server (70).

## Description

### FIELD

Embodiments described herein relate generally to a home electric appliance control apparatus, a home electric appliance control system, and a home electric appliance control method.

### BACKGROUND

In the past, a home electric appliance control system is known that transmits information such as operation statuses of home electric appliances in a home from a home electric appliance control apparatus set in the home to an external server outside the home and manages the information. Even when a user of such a system is outside the home, the user can learn the operation statuses of the home electric appliances by accessing the external server using a portable terminal or the like.

For example, a network home electric appliance system is known that transmits information to an external server according to operation statuses of home electric appliances in a home. In the network home electric appliance system, a home electric appliance control apparatus collects information concerning the home electric appliances and transmits the information to the external server via a communication network. A user can operate home electric appliances such as lights and air conditioners from outside the home by accessing the external server using a portable information terminal.

Further, a remote control system is known that can communicate equipment numbers of remote control target home electric appliances, control commands, and the like to a home electric appliance controller and a portable terminal for control. The system notifies the home electric appliance controller of information concerning the control target home electric appliances. The system registers in advance, in the home electric appliance controller, portable terminals that can perform remote control. The system notifies the registered portable terminals of information such as access pass words generated by the home electric appliance controller and control commands for home electric appliances.

According to the spread of solar panels and the like, it is possible to set a solar panel, a stationary storage battery, or the like in a general house and supply electric power to home electric appliances set in the home even during a power failure. Even if power supply from an electric power company is interrupted, it is possible to autonomously supply electric power to home electric appliances in homes.

Further, an uninterruptible power supply (UPS) apparatus is known that can supplement power supply in the case of a power failure for a long time. For example, in an example of the UPS apparatus, solar power generation equipment, a solar power generation equipment connection circuit, and a storage battery are provided. If the voltage of the storage battery decreases to a predetermined voltage, power supply is switched to power supply by solar power generation to autonomously supply electric power during a power failure.

However, in the home electric appliance control system in the past, if a power network of an electric power company may not be able to be used because of a reason such as a power failure, even if power supply can be autonomously maintained in a home, power supply to an electric apparatus set outside the home is not maintained. Therefore, if information concerning home electric appliances and the like in the home is transmitted to an external server using the electric apparatus set outside the home, the information in the home may not be able to be uploaded to the external server during the power failure.

### BRIEF DESCRIPTION OF THE DRAWINGS

FIG. 1 is a schematic diagram of a home electric appliance control system according to a first embodiment;
FIG. 2A is a diagram of an example of operation information transmitted from a home electric appliance, which is an air conditioner, to a home electric appliance control apparatus in the first embodiment;
FIG. 2B is a diagram of an example of operation information transmitted from a home electric appliance, which is a water heater, to the home electric appliance control apparatus in the first embodiment;
FIG. 2C is a diagram of an example of operation information transmitted from a home electric appliance, which is a lighting controller, to the home electric appliance control apparatus in the first embodiment;
FIG. 2D is a diagram of an example of information concerning a power supply state transmitted from a power distribution panel to the home electric appliance control apparatus;
FIG. 3 is a schematic flowchart for explaining processing by the home electric appliance control system according to the first embodiment;
FIG. 4 is a flowchart for explaining an example of a flow of information transmission processing in the home electric appliance control apparatus according to the first embodiment;
FIG. 5 is a diagram for explaining an example of operation during a power failure of the home electric appliance control system according to the first embodiment;
FIG. 6 is a diagram for explaining an example of operation during power restoration of the home electric appliance control system according to the first embodiment;
FIG. 7 is a flowchart for explaining an example of a flow of information transmission processing in a home electric appliance control system according to a second embodiment;
FIG. 8 is a diagram of a schematic configuration of a home electric appliance control apparatus according to a first modification; and
FIG. 9 is a diagram of an example of a condition table stored by a storing unit of the home electric appliance control apparatus according to the first modification.

### DETAILED DESCRIPTION

In general according to one embodiment, a home electric appliance control apparatus that communicates with a server that manages information about electric appliances in the home, includes a detecting unit, a first communication unit, a second communication unit, a selecting unit, and a control unit. The detecting unit is configured to detect whether a power supply source that supplies power to the electric appliances in the home is an external power transmission network or a backup power supply. The first communication unit is configured to access an external network via a network connecting apparatus that receives power from the external power transmission network. The second communication unit is configured to access the external network via a terminal that can operate without receiving the power from the external power transmission network. The selecting unit is configured to select the first communication unit or the second communication unit according to the power supply source detected by the detecting unit. The control unit is configured to control the first communication unit or the second communication unit as selected by the selecting unit to transmit information about one or more of the home electric appliances to the server. In the present description, the term "when" is not used to imply a specific time point. Rather, the term "when" is used to imply a relation between two operations. For example, in the phrase "the selecting unit selects the first communication unit when the power supply source detected by the detecting unit is the external power transmission network", the selecting unit does not need to perform a selecting operation at a specific time point at which the detecting unit performs a detecting operation. In other words, the above phrase means that if the detecting unit detects that the power supply source is the external power transmission network, the selecting unit will select the first communication unit according to the result of detection, or in response to the detecting operation.

Home electric appliance control apparatuses, home electric appliance control systems, and home electric appliance control methods according to embodiments are explained in detail below with reference to the accompanying drawings. Components having the same functions in the embodiments are denoted by the same reference numerals and signs. Redundant explanation of the components is omitted.

### First Embodiment

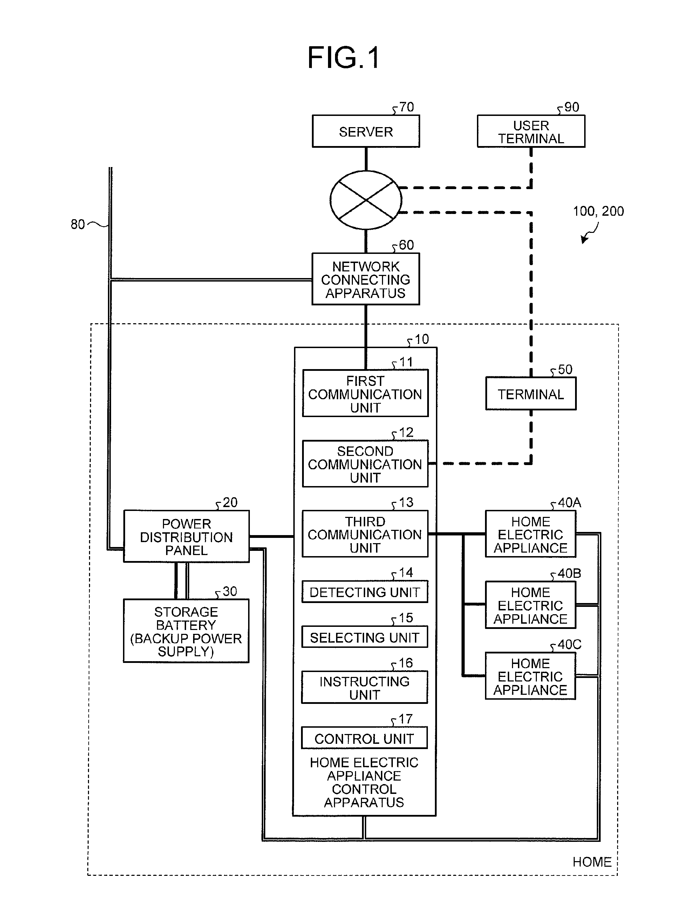

FIG. 1 is a schematic diagram of a home electric appliance control system 100 according to a first embodiment. As shown in FIG. 1, a home electric appliance control apparatus 10, a power distribution panel 20, a storage battery 30, home electric appliances 40A, 40B, and 40C, a terminal 50, a network connecting apparatus 60, a server 70, an external power transmission network 80, and a user terminal 90 are arranged.

The home electric appliance control system 100 includes at least the home electric appliance control apparatus 10 and the server 70. The home electric appliance control apparatus 10, the power distribution panel 20, the storage battery 30, the home electric appliances 40A, 40B, and 40C are arranged in a home where a user of the home electric appliance control system 100 lives. The network connecting apparatus 60, the server 70, and the external power transmission network 80 are set outside the home. The terminal 50 can move in the home and outside the home if a user carries the terminal 50. The terminal 50 may be an information communication terminal fixed in the home. The user terminal 90 can move in the home and outside the home if the user carries the user terminal 90.

### Power supply path and information transmission path

In FIG. 1, a double line indicates a power supply path among the apparatuses. A thick line indicates an information transmission path among the apparatuses. First, the power supply path in FIG. 1 is explained. The external power transmission network 80 is, for example, a power transmission network for an electric power company to supply electric power to homes, commercial facilities, and the like. As shown in FIG. 1, the electric power supplied from the external power transmission network 80 is supplied to the power distribution panel 20 set in the home. The power distribution panel 20 distributes the supplied electric power as appropriate and supplies the electric power to the home electric appliance control apparatus 10, the storage battery 30, and the home electric appliances 40A, 40B, and 40C in the home. The external power transmission network 80 supplies electric power to the network connecting apparatus 60 arranged outside the home. The terminal 50 and the user terminal 90 operate with autonomous power supplies. However, the terminal 50 and the user terminal 90 may be connected to the external power transmission network 80 by adapters or the like to be configured to receive power supply to storage batteries incorporated in the terminal 50 and the user terminal 90.

The server 70 receives the supply of electric power through a path different from a power line for supplying electric power from the external power transmission network 80 to the home. Therefore, even if some abnormality occurs in the external power transmission network 80 and the power supply to the home in FIG. 1 is disabled, electric power is supplied to the server 70 from the external power transmission network 80 or the like through another power supply path.

The information transmission path in FIG. 1 is explained. As shown in FIG. 1, the home electric appliance control apparatus 10 is connected to the power distribution panel 20, the home electric appliances 40A, 40B, and 40C, the terminal 50, and the network connecting apparatus 60 and configured to be capable of transmitting and receiving information to and from these apparatuses. The home electric appliance control apparatus 10 is connected to the server 70 via a network by the network connecting apparatus 60 and configured to be capable of transmitting and receiving information to and from the server 70. Further, the home electric appliance control apparatus 10 is connected to the server 70 via the network by the terminal 50 and configured to be capable of transmitting and receiving information to and from the server 70. Communication with the server 70 via the home electric appliance control apparatus 10, the terminal 50, and the network connecting apparatus 60 is explained more in detail below.

Other information terminals such as the user terminal 90 can access the network. The user terminal 90 can access the server 70 and execute transmission and reception of information via the network. The user terminal 90 transmits an instruction for the home electric appliance control apparatus 10 to the server 70 via the network. The server 70 transmits information to the home electric appliance control apparatus 10 on the basis of the instruction. The home electric appliance control apparatus 10 controls the operations of the power distribution panel 20, the storage battery 30, the home electric appliances 40A, 40B, and 40C, and the like in the home on the basis of the information transmitted from the server 70.

The network that connects the home electric appliance control apparatus 10, the power distribution panel 20, the home electric appliances 40A, 40B, and 40C, and the network connecting apparatus 60 to be capable of communicating information may be a local area network (LAN), an ECHONET Lite (registered trademark), and the like. However, a method of enabling information communication among the apparatuses in the home is not specifically limited and may be wire or wireless.

It is assumed herein that the network that connects the terminal 50, the network connecting apparatus 60, the server 70, and the user terminal 90 to be capable of communicating information is the Internet. However, the network is not specifically limited to the Internet. Various networks such as an intranet, a wide area network (WAN), and a campus area network (CAN) can be applied as long as the network can enable information communication between the home electric appliance control apparatus 10 and the server 70 and between the home electric appliance control apparatus 10 and the user terminal 90 via the network connecting apparatus 60 and the terminal 50.

### Information communication between the home electric appliance control apparatus 10 and the server 70

An example of information communication between the home electric appliance control apparatus 10 and the server 70 is explained. The home electric appliance control apparatus 10 receives information concerning a power supply state of the power distribution panel 20 and operation statuses of the home electric appliances 40A, 40B, and 40C in the home (hereinafter also referred to as "home electric appliance information" and "operation information") from the power distribution panel 20 and the home electric appliances 40A, 40B, and 40C. The home electric appliance control apparatus 10 transmits these kinds of information to the server 70 via the network.

An interval of reception and transmission of information is not specifically limited. For example, information may be transmitted to the home electric appliance control apparatus 10 if a change occurs in the operation statuses of the home electric appliances 40A, 40B, and 40C and successively transmitted to the server 70. Information may be transmitted from the home electric appliances 40A, 40B, and 40C to the home electric appliance control apparatus 10 in every predetermined period, for example, every 30 minutes and then successively transmitted to the server 70. Information may be transmitted to the home electric appliance control apparatus 10 at timing when power supplies for the home electric appliances 40A, 40B, and 40C are turned on and transmitted to the server 70.

A transmission interval of information from the power distribution panel 20 is the same. Information may be transmitted in every predetermined period or when a power supply for the power distribution panel 20 is turned on. Information concerning residual electric energy may be transmitted to the home electric appliance control apparatus 10 if residual electric energy of the storage battery 30 decreases to a predetermined ratio to storable electricity and transmitted to the server 70. Information may be transmitted if the residual electric energy of the storage battery 30 decreases to a predetermined quantity, for example, if the residual electric energy of the storage battery 30 is 10%, 20%, or 30% of the storable electricity.

An information transmission interval does not always have to be specifically set for the power distribution panel 20 and the home electric appliances 40A, 40B, and 40C. Information may be transmitted only if a request is sent from the home electric appliance control apparatus 10 to the power distribution panel 20 and the home electric appliances 40A, 40B, and 40C and transmitted from the home electric appliance control apparatus 10 to the server 70.

A storing unit may be provided in the home electric appliance control apparatus 10 and information transmitted from the power distribution panel 20 and the home electric appliances 40A, 40B, and 40C may be temporarily stored in the storing unit and transmitted to the server 70 in every predetermined period or every time a predetermined opportunity occurs.

### Example of information concerning operation statuses of the home electric appliances

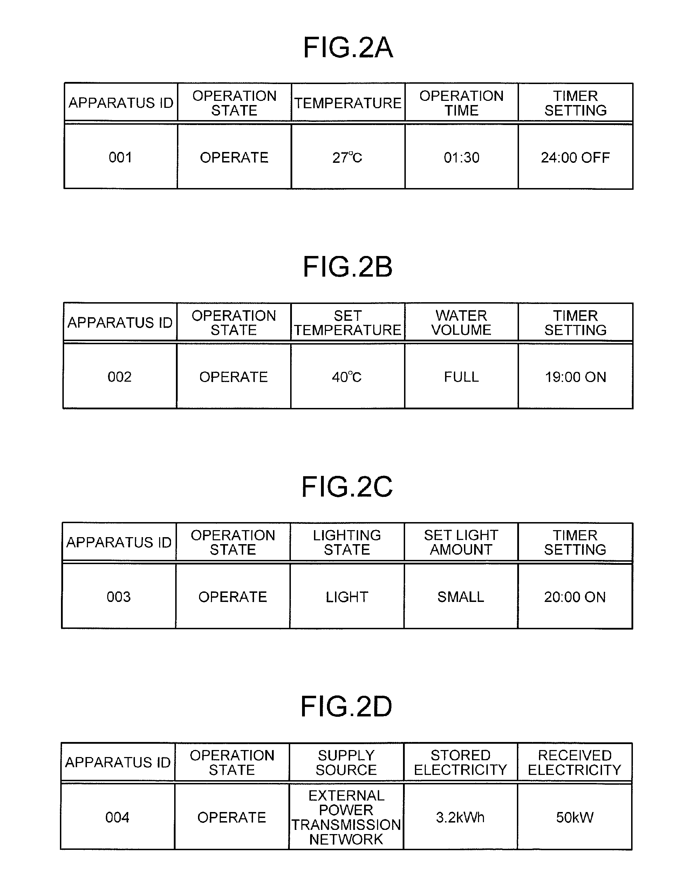

FIGS. 2A to 2C are diagrams of an example of information concerning operation statuses of the home electric appliances 40A, 40B, and 40C. FIG. 2A is a diagram of an example of operation information transmitted from a home electric appliance, which is an air conditioner, to the home electric appliance control apparatus 10 in the first embodiment. FIG. 2B is a diagram of an example of operation information transmitted from a home electric appliance, which is a water heater, to the home electric appliance control apparatus 10 in the first embodiment. FIG. 2C is a diagram of an example of operation information transmitted from a home electric appliance, which is a lighting controller, to the home electric appliance control apparatus 10 in the first embodiment.

The home electric appliances 40A, 40B, and 40C in the first embodiment may be, for example, air conditioners, water heaters, lighting controllers, security sensors, interphone, gas leak alarms, fire alarms, emergency buttons, or the like. In the following explanation, it is assumed that the home electric appliance 40A is an air conditioner, the home electric appliance 40B is a water heater, and the home electric appliance 40C is a lighting controller.

As shown in FIG. 2A, the home electric appliance 40A, which is the air conditioner, transmits information such as an operation state "operate", a set temperature "27°C", an operation time "01:40", and timer setting "24:00 off" in association with an apparatus ID (identifier) "001" for uniquely identifying the home electric appliance.

As shown in FIG. 2B, the home electric appliance 40B, which is the water heater, transmits information such as an operation state "operate", a set temperature "40°C", a water volume "Full", and timer setting "19: 00 on" in association with an apparatus ID "002" for uniquely identifying the home electric appliance.

As shown in FIG. 2C, the home electric appliance 40C, which is the lighting controller, transmits information such as an operation state "operate", a lighting state "light", a set light amount "small", and timer setting "20:00 on" in association with an apparatus ID "003" for uniquely identifying the home electric appliance.

The information shown in FIGS. 2A to 2C are only examples. Forms and contents of information to be transmitted can be changed as appropriate according to functions of the home electric appliances 40A to 40C and setting of the server 70.

### Example of information concerning a power supply state

An example of information transmitted from the power distribution panel 20 is explained with reference to FIG. 2D. FIG. 2D is a diagram of an example of information concerning a power supply state transmitted from the power distribution panel 20 to the home electric appliance control apparatus 10. As shown in FIG. 2D, the power distribution panel 20 transmits information such as an operation state "operate", a power supply source "external power transmission network", stored electricity "3.2 kWh", and received electricity "50 kW" in association with an apparatus ID "004" for uniquely identifying the power distribution panel 20.

A power generating device such as a solar panel can be provided separately from the storage battery 30 and connected to the power distribution panel 20 to transmit information concerning electric power generation and electric power consumption and the like. Besides, forms and contents of information to be transmitted can be changed as appropriate according to functions of the power distribution panel 20, the storage battery 30, and other arbitrary power generating devices and setting of the server 70.

Example of the configuration of the home electric appliance control apparatus.

Referring back to FIG. 1, the configuration of the home electric appliance control apparatus 10 is explained. The home electric appliance control apparatus 10 includes a first communication unit 11, a second communication unit 12, a third communication unit 13, a detecting unit 14, a selecting unit 15, an instructing unit 16, and a control unit 17.

The first communication unit 11 establishes network connection to the server 70 via the network connecting apparatus 60. The first communication unit 11 and the network connecting apparatus 60 are connected by a network such as a local area network. The network connecting apparatus 60 and the server 70 are connected by a network such as the Internet. The first communication unit 11 may be set to be preferentially selected as a communication unit in an initial state of the home electric appliance control apparatus 10. The first communication unit 11 transmits information, which the home electric appliance control apparatus 10 receives from the power distribution panel 20 and the home electric appliances 40A, 40B, and 40C, to the server 70 and receives information from the server 70. The first communication unit 11 receives an instruction from the user terminal 90 via the server 70, the network, and the network connecting apparatus 60.

The second communication unit 12 establishes communication with the terminal 50 in the home by radio. The second communication unit 12 is connected to the network outside the home via the terminal 50. The second communication unit 12 transmits information received from the power distribution panel 20 and the home electric appliances 40A, 40B, and 40C to the server 70 via the terminal 50. The second communication unit 12 includes, for example, a wireless communication function and an infrared communication function. The second communication unit 12 can establish connection to the Internet and the like by performing communication with other apparatuses.

The terminal 50 is, for example, a cellular phone owned by a user of the home electric appliance control system 100 or a communication apparatus including the wireless communication function. The terminal 50 does not need to be always set in the home. For example, an arbitrary apparatus can be used as the terminal 50 as long as the apparatus is a terminal including a function of a wireless LAN router, a wireless modem, or a Wi-Fi router and capable of establishing connection to the network.

In the following explanation, the second communication unit 12 is explained as a unit that establishes communication with the terminal 50 by radio. However, a form of the establishment of communication by the second communication unit 12 is not specifically limited. For example, the second communication unit 12 and the terminal 50 may be able to be connected by a cable. The second communication unit 12 itself may be configured as a wireless communication terminal to be capable of directly establishing wireless communication with the network not via the terminal 50.

The third communication unit 13 receives information from the power distribution panel 20 and the home electric appliances 40A, 40B, and 40C. The third communication unit 13 transmits information to the power distribution panel 20 and the home electric appliances 40A, 40B, and 40C. For example, the third communication unit 13 receives information concerning an operation state shown in FIG. 2A from the home electric appliance 40A. The third communication unit 13 receives information concerning a power supply state shown in FIG. 2D from the power distribution panel 20.

The third communication unit 13 transmits instructions to the power distribution panel 20 and the home electric appliances 40A, 40B, and 40C on the basis of the instructions transmitted from the server 70 to the home electric appliance control apparatus 10. For example, if an instruction for changing temperature setting of the home electric appliance 40A is transmitted from the user terminal 90 to the server 70, the server 70 transmits the instruction to the home electric appliance control apparatus 10. In the home electric appliance control apparatus 10, the third communication unit 13 transmits the instruction to the home electric appliance 40A, whereby the temperature setting of the home electric appliance 40A is changed. The third communication unit 13 executes transmission and reception of information through, for example, the ECHONET Lite.

The detecting unit 14 acquires, from the third communication unit 13, information (see FIG. 2D) from the power distribution panel 20 and detects a power supply source. For example, if the power distribution panel 20 may not be able to receive power supply from the external power transmission network 80 during a power failure, the power distribution panel 20 controls the storage battery 30 to supply electric power. The detecting unit 14 detects, on the basis of the information received from the power distribution panel 20, whether the power supply source is the external power transmission network 80 or the storage battery 30.

The selecting unit 15 selects, on the basis of information detected by the detecting unit 14, one of the first communication unit 11 and the second communication unit 12 as a function unit that transmits the information received from the power distribution panel 20 and the home electric appliances 40A, 40B, and 40C to the server 70. If the power supply source detected by the detecting unit 14 is the external power transmission network 80, the selecting unit 15 selects the first communication unit 11. If the power supply source detected by the detecting unit 14 is the storage battery 30, the selecting unit 15 selects the second communication unit 12. The selecting unit 15 is configured by a switching device such as a switch.

The instructing unit 16 generates, on the basis of instructions received from the server 70 or the user terminal 90 via the first communication unit 11 or the second communication unit 12, instructions for controlling the power distribution panel 20 and the home electric appliances 40A, 40B, and 40C and gives the instructions to the third communication unit 13 to thereby cause the third communication unit 13 to transmit the instructions for the power distribution panel 20 and the home electric appliances 40A, 40B, and 40C.

The control unit 17 controls the operations of the units of the home electric appliance control apparatus 10 on the basis of information transmitted and received to and from the power distribution panel 20, the home electric appliances 40A, 40B, and 40C, the server 70, and the like. For example, the control unit 17 controls generation of an instruction by the instructing unit 16 based on information received by the first communication unit 11 and the second communication unit 12 and transmission processing for the information by the third communication unit 13. The control unit 17 controls the operation of the selecting unit 15 based on the power supply source detected by the detecting unit 14. The control unit 17 controls upload of information to the server 70 by the first communication unit 11 and the second communication unit 12.

### Power distribution panel and storage battery

The power distribution panel 20 distributes electric power from the external power transmission network 80 as appropriate and supplies the electric power to home electric appliances in the home. The power distribution panel 20 stores the electric power supplied from the external power transmission network 80 in the storage battery 30 as appropriate. If another power generation apparatus such as a solar panel is provided, the power distribution panel 20 and the solar panel may be connected to store generated electric power in the storage battery 30. The power distribution panel 20 transmits information concerning a power supply state to the home electric appliance control apparatus 10 and receives an instruction from the home electric appliance control apparatus 10. An apparatus including a communication unit that performs transmission and reception of information concerning the control by the power distribution panel 20 and a detecting unit that detects information concerning a power supply state may be provided separately from the power distribution panel 20 to transmit and receive information to and from the home electric appliance control apparatus 10.

The storage battery 30 stores electric power at normal time and supplies the electric power to the home on the basis of an instruction of the power distribution panel 20 at emergency time. Information concerning residual electric energy of the storage battery 30 is transmitted to the home electric appliance control apparatus 10. As explained above, if the power generating apparatus such as a solar panel is provided, the storage battery 30 can be used to store generated electric power.

The storage battery 30 explained in this embodiment is an example of a backup power supply. The backup power supply is a power supply that does not depend on an external power transmission network. A power storing device or a power creating device can be used. Examples of the power creating device include a solar battery, a secondary battery, and a fuel battery. The home electric appliance control system 100 can be configured by replacing the storage battery 30 in this embodiment with any one of these backup power supplies.

### Network connecting apparatus

The network connecting apparatus 60 establishes connection to the server 70 via the network. It is desirable to set information for connection to the server 70 in the network connecting apparatus 60 in advance and always connect the network connecting apparatus 60 to the first communication unit 11 by wire. The network connecting apparatus 60 is, for example, a connecting apparatus such as a router. In the first embodiment, the network connecting apparatus 60 is set outside the home. The network connecting apparatus 60 does not receive power supply from the power distribution panel 20. Electric power is supplied to the network connecting apparatus 60 independently from the external power transmission network 80. The network connecting apparatus 60 is, for example, an Internet router set in a common-use space and shared by plural homes in a condominium.

### Server

The server 70 is a management server operated by a management company or the like that manages the home electric appliance control system 100. The server 70 manages and stores information transmitted from the home electric appliance control apparatus 10. The server 70 transmits the information to the user terminal 90 on the basis of an instruction from the user terminal 90. For example, the user of the home electric appliance control system 100 accesses a web page of the management company from the user terminal 90 via the Internet to acquire the information managed by the server 70. The user transmits an instruction to the server 70 through the web page to transmit the instruction to the home electric appliance control apparatus 10 and controls the home electric appliances 40A, 40B, and 40C in the home.

For example, if the user accesses the server 70 from the user terminal 90, the user registers information concerning the user terminal 90 in the server 70 in advance and sets a predetermined password. Consequently, it is possible to secure security of the information managed by the server 70. The user can arbitrarily access information concerning home electric appliances in the home of the user.

### Terminal 50

If the home electric appliance control apparatus 10 selects the second communication unit 12, the terminal 50 establishes connection to the Internet. For example, the terminal 50 is a communication terminal such as a cellular phone. The second communication unit 12 and the terminal 50 are set in advance to perform communication by, for example, a dialup networking profile (DUN), which is a profile of Bluetooth (registered trademark). The home electric appliance control apparatus 10 can perform network communication using a point-to-point protocol (PPP) via the second communication unit 12 and the terminal 50. However, the terminal 50 may be a communication apparatus connected to the network in other forms. For example, the terminal 50 may be an apparatus that performs mobile broadband communication.

### Flow of processing by the home electric appliance control system

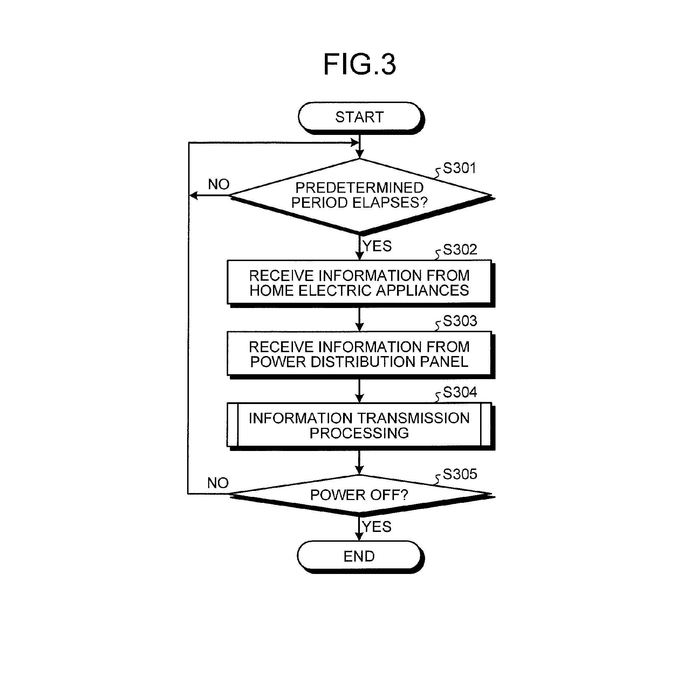

FIG. 3 is a flowchart for explaining an example of processing by the home electric appliance control system 100 according to the first embodiment. An example of processing by the home electric appliance control system 100 is explained below with reference to FIG. 3.

First, a power supply for the home electric appliance control apparatus 10 is turned on and the operation of the home electric appliance control apparatus 10 is started. The control unit 17 determines whether a predetermined period elapses after the power supply is turned on (step S301). If the control unit 17 determines that the predetermined period does not elapse (No in step S301), the control unit 17 repeats the processing in step S301. If the control unit 17 determines that the predetermined period elapses (Yes in S301), the control unit 17 transmits a request from the third communication unit 13 to the home electric appliances 40A, 40B, and 40C and receives information concerning operation states of the home electric appliances 40A, 40B, and 40C (step S302) . Subsequently, the control unit 17 transmits a request from the third communication unit 13 to the power distribution panel 20 and receives information concerning a power supply state of the power distribution panel 20 (step S303). The control unit 17 executes information transmission processing for transmitting the received information to the server 70 (step S304). Subsequently, the control unit 17 determines whether the power supply is turned off (step S305). If the control unit 17 determines that the power supply is turned off (Yes in step S305), the control unit 17 ends the processing. If the control unit 17 determines that the power supply is not turned off (No in step S305), the control unit 17 returns to the processing in step S301 and repeats the processing at steps S302 to S305.

In FIG. 3, it is explained that the home electric appliance control apparatus 10 requests, every time the predetermined period elapses, the home electric appliances 40A, 40B, and 40C and the power distribution panel 20 to transmit information. However, as explained above, information may be received in other forms. The order and the like of information acquisition can also be arbitrarily changed.

### Flow of information transmission processing by the home electric appliance control apparatus

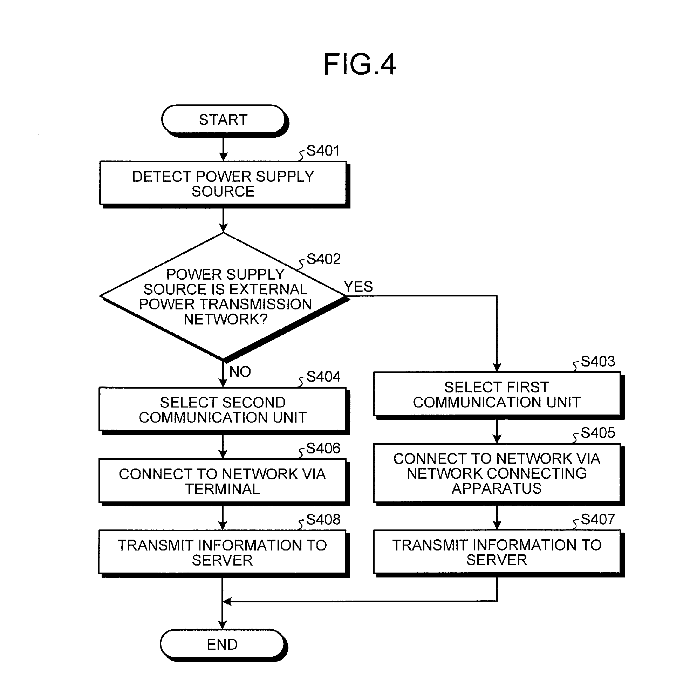

FIG. 4 is a flowchart for explaining an example of a flow of the information transmission processing (step S304 in FIG. 3) in the home electric appliance control apparatus 10 according to the first embodiment. In the home electric appliance control apparatus 10, first, the third communication unit 13 receives information from the power distribution panel 20 and the home electric appliances 40A, 40B, and 40C. Then, as shown in FIG. 4, the detecting unit 14 detects a power supply source from the received information (step S401). The control unit 17 determines whether the power supply source detected by the detecting unit 14 is the external power transmission network 80 (step S402). If the control unit 17 determines that the power supply source is the external power transmission network 80 (Yes in step S402), the control unit 17 controls the selecting unit 15 to select the first communication unit 11 (step S403). On the other hand, if the control unit 17 determines that the power supply source is the storage battery 30 (No in step S402), the control unit 17 controls the selecting unit 15 to select the second communication unit 12 (step S404). If the first communication unit 11 is selected, the first communication unit 11 is connected to the network via the network connecting apparatus 60 (step S405). The first communication unit 11 transmits the information to the server 70 via the network connecting apparatus 60 (step S407). On the other hand, if the second communication unit 12 is selected, the second communication unit 12 establishes connection to the network via the terminal 50 (step S406). The second communication unit 12 transmits the information to the server 70 via the terminal 50 (step S408). When the second communication unit 12 finishes transmitting the information to the server 70, the information transmission processing ends. The transmission means uploading the information to the server 70.

### Example of processing during a power failure

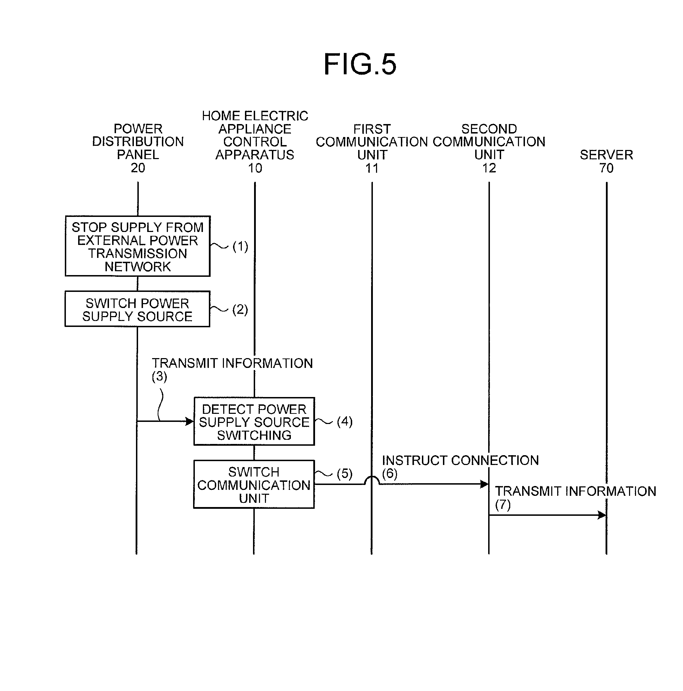

FIG. 5 is a diagram for explaining an example of the operation during a power failure of the home electric appliance control system 100 according to the first embodiment. The home electric appliance control apparatus 10 is configured to be capable of appropriately transmitting, during a power failure, even if the power supply from the external power transmission network 80 is interrupted, information to the server 70 by detecting a power supply source to switch information communicating means.

First, it is assumed that some failure, for example, breaking of wire occurs in the external power transmission network 80 and the power supply to the power distribution panel 20 is interrupted ((1) in FIG. 5). In other words, it is assumed that a power failure occurs. At this point, the power distribution panel 20 automatically switches the power supply to the power supply from the storage battery 30 according to the interruption of the power supply ((2) in FIG. 5). The power distribution panel 20 includes, in information concerning a power supply state, information indicating that the power supply source is the storage battery 30 and transmits the information to the home electric appliance control apparatus 10 ((3) in FIG. 5). In the home electric appliance control apparatus 10, the detecting unit 14 detects from the received information that the power supply source is switched to the storage battery 30 ((4) in FIG. 5). The selecting unit 15 switches the communication unit from the first communication unit 11 to the second communication unit 12, i.e., selects the second communication unit 12 on the basis of information concerning the power supply source detected by the detecting unit 14 ((5) in FIG. 5). According to the selection of the selecting unit 15, the home electric appliance control apparatus 10 transmits a connection instruction to the second communication unit 12 ((6) in FIG. 5). The second communication unit 12 establishes connection to the network according to the connection instruction and transmits the information to the server 70 ((7) in FIG. 5). The second communication unit 12 maintains the established connection until the second communication unit 12 receives an instruction for disconnecting the connection.

As explained above, even if the power failure occurs and the network connecting apparatus 60 that receives the power supply from the external power transmission network 80 does not operate, the home electric appliance control apparatus 10 switches the communicating means and transmits the information. Therefore, the home electric appliance control apparatus 10 can always transmit information from the power distribution panel 20 and the home electric appliances 40A, 40B, and 40C to the server 70 without being affected by the power failure. In order to maintain the connection established by the second communication unit 12, after the power failure, the user outside the home can access the server 70 using the user terminal 90 and check operation states of home electric appliances and the like in the home. The user can perform control of the home electric appliances and the like in the home by transmitting an instruction to the server 70 using the user terminal 90.

### Example of processing during restoration

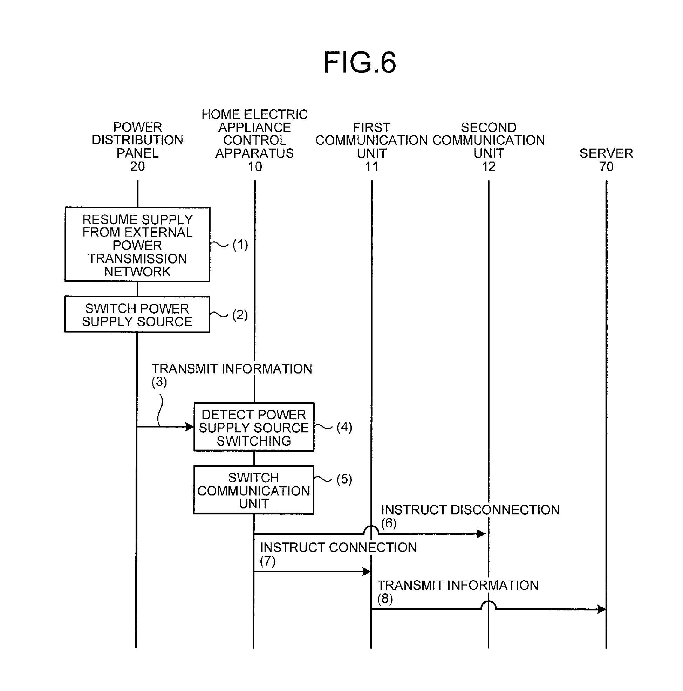

FIG. 6 is a diagram for explaining an example of the operation during power restoration of the home electric appliance control system according to the first embodiment. The home electric appliance control apparatus 10 is configured to switch, if the external power transmission network 80 is restored from the power failure and electric power is normally supplied, the communicating means again to transmit information to the server 70.

First, when the external power transmission network 80 is restored, the power supply to the power distribution panel 20 is resumed ((1) in FIG. 6). When the power supply from the external power transmission network 80 is resumed, the power distribution panel 20 automatically switches the power supply source from the storage battery 30 to the external power transmission network 80 ((2) in FIG. 6). The power distribution panel 20 includes, in information concerning a power supply state, information indicating that the power supply source is the external power transmission network 80 and transmits the information to the home electric appliance control apparatus 10 ((3) in FIG. 6). In the home electric appliance control apparatus 10, the detecting unit 14 detects from the received information that the power supply source is switched ((4) in FIG. 6). The selecting unit 15 switches the communication unit, i.e., selects the first communication unit 11 on the basis of the information concerning the power supply source detected by the detecting unit 14 ((5) in FIG. 6). According to the selection of the selecting unit 15, the home electric appliance control apparatus 10 transmits an instruction for disconnecting the connection to the network to the second communication unit 12 ((6) in FIG. 6). According to the instruction, the second communication unit 12 disconnects the connection to the network established via the terminal 50. Further, the home electric appliance control apparatus 10 transmits a connection instruction to the first communication unit 11 ((7) in FIG. 6). According to the instruction, the first communication unit 11 transmits the information to the server 70 via the network connecting apparatus 60 ((8) in FIG. 6). Consequently, a change of a communication path corresponding to the restoration of the external power transmission network 80 is completed.

### Effects of the first embodiment

As explained above, the home electric appliance control apparatus according to the first embodiment includes the detecting unit 14 that detects whether the power supply source to the home is the external power transmission network 80 or the storage battery 30, the first communication unit 11 that accesses the network via the network connecting apparatus 60 that receives the power supply from the external power transmission network 80, the second communication unit 12 that accesses the network via the terminal 50 that can operate without receiving the power supply from the external power transmission network 80, and the selecting unit 15 that selects the first communication unit 11 if the power supply source detected by the detecting unit 14 is the external power transmission network 80 and selects the second communication unit 12 if the power supply source detected by the detecting unit 14 is the storage battery 30. The home electric power control apparatus transmits home electric appliance information in the home to the server 70 using the first communication unit 11 or the second communication unit 12 selected by the selecting unit 15. Therefore, even if the network connecting apparatus 60 always connected to the first communication unit 11 is not operating because of the influence of a power failure, the home electric appliance control apparatus can establish network connection via another terminal 50 and upload the information concerning the power distribution panel 20 and the home electric appliances 40A, 40B, and 40C to the server 70. If the external power transmission network 80 is restored, the home electric appliance control apparatus can detect that the power supply source is switched, immediately switch the communication unit, and upload the information to the server 70 through a normal communication path. In this way, according to the home electric appliance control system according to the first embodiment, even if the external power transmission network may not be able to be used because of a power failure or the like, it is possible to transmit information concerning home electric appliances in the home to the external server.

### Second Embodiment

In the first embodiment explained above, the network connecting apparatus 60 is arranged outside the home and the power supply from the external power transmission network 80 is received. If the electric power is not supplied to the power distribution panel 20 from the external power transmission network 80, it is determined that the network connecting apparatus 60 is not operating. The communication unit is switched. However, it is also conceivable that a failure only occurs in a branch line to the power distribution panel 20, the power supply to the network connecting apparatus 60 continues, and information transmission via the network connecting apparatus 60 is possible. Therefore, in a second embodiment, even if the power supply from the external power transmission network 80 to the power distribution panel 20 is interrupted, the communication unit is not immediately switched and is switched after it is confirmed that the network connecting apparatus 60 is not operating.

A home electric appliance control system according to the second embodiment is the same as the home electric appliance control system according to the first embodiment in the configurations of the units except that the operation of the home electric appliance control apparatus is different. Therefore, reference numerals and signs same as those in the first embodiment are used. Explanation concerning the same functions is omitted.

### Example of processing by the home electric appliance control system according to the second embodiment

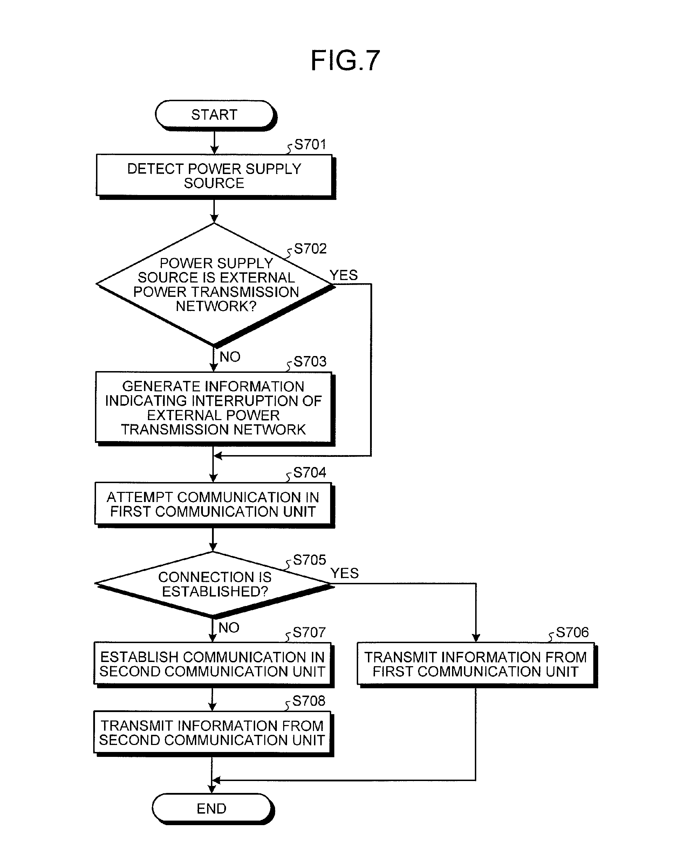

FIG. 7 is a flowchart for explaining an example of a flow of information transmission processing in a home electric appliance control system 200 according to the second embodiment. In the home electric appliance control system 200, as in the home electric appliance control system 100 according to the first embodiment, the home electric appliance control apparatus 10 receives information from the power distribution panel 20 and the home electric appliances 40A, 40B, and 40C. The detecting unit 14 detects information concerning a power supply source from the received information (step S701). The selecting unit 15 determines, on the basis of the information detected by the detecting unit 14, whether the power supply source is the external power transmission network 80 (step S702). If the power supply source is the storage battery 30 (No in step S702), the selecting unit 15 transmits the information to the instructing unit 16. The instructing unit 16 generates information indicating that the external power transmission network 80 is interrupted (step S703). On the other hand, if the selecting unit 15 determines that the power supply source is the external power transmission network 80 (Yes in step S702), the instructing unit 16 does not generate particular information. Irrespective of whether the selecting unit 15 determines that the power supply source is the external power transmission network 80 or the storage battery 30, first, the selecting unit 15 selects the first communication unit 11 and attempts communication via the first communication unit 11 (step S704). If connection to the network is established via the first communication unit 11 (Yes in step S705), the home electric appliance control apparatus 10 transmits the information from the first communication unit 11 to the server 70 (step S706). On the other hand, if the connection to the network is not established via the first communication unit 11 (No in step S705), the selecting unit 15 selects the second communication unit 12 and establishes the connection to the network using the second communication unit 12 (step S707). The home electric appliance control apparatus 10 transmits the information to the server 70 via the second communication unit 12 (step S708). Consequently, the information transmission processing is completed.

### Effects of the second embodiment

As explained above, in the second embodiment, the selecting unit 15 selects the first communication unit 11 if the power supply source detected by the detecting unit 14 is the storage battery 30 and it is possible to access the network via the network connecting apparatus 60. The selecting unit 15 selects the second communication unit 12 if the power supply source detected by the detecting unit 14 is the storage battery 30 and it may be difficult to access the network via the network connecting apparatus 60. Therefore, even if the power supply source to the power distribution panel 20 changes, if it is possible to perform information transmission through a normal communication path, it is possible to upload information to the server 70 without changing a communication path. Therefore, even if the external power transmission network 80 may not be able to be used because of a power failure or the like, it is possible to transmit information concerning home electric appliances in the home to the server using an optimum communication path.

### First Modification

In the first embodiment explained above, it is possible to surely upload information to the server 70 by changing the communication path according to whether the power supply source to the home is the external power transmission network 80 or the storage battery 30. However, it is also possible to change an information communication path taking into account other conditions. For example, if a solar panel is provided to generate power and the power generated by the solar panel is stored in the storage battery 30, even if electric power is supplied from the storage battery 30, a power failure does not always occur in the external power transmission network 80. Therefore, as the first modification, an example in which communicating means is selected on the basis of information other than the information concerning the power supply source is explained below as a first modification.

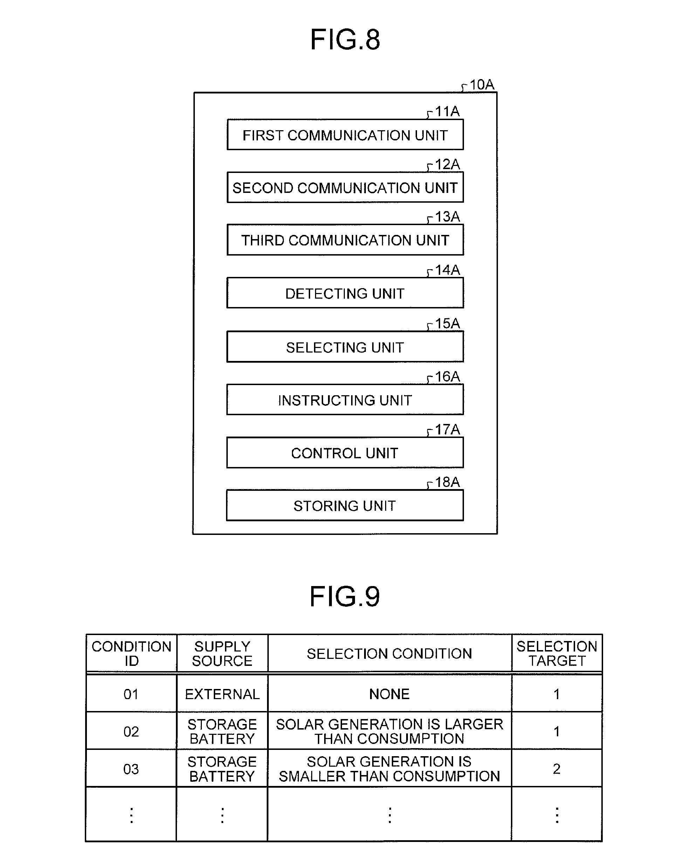

FIG. 8 is a diagram of a schematic configuration of a home electric appliance control apparatus 10A according to the first modification. The home electric appliance control apparatus 10A includes a storing unit 18A in addition to the components included in the home electric appliance control apparatus 10 according to the first embodiment. The functions and the configurations of the other components, i.e., a first communication unit 11A, a second communication unit 12A, a third communication unit 13A, a detecting unit 14A, a selecting unit 15A, an instructing unit 16A, and a control unit 17A are generally the same as the functions and the configurations of the first communication unit 11, the second communication unit 12, the third communication unit 13, the detecting unit 14, the selecting unit 15, the instructing unit 16, and the control unit 17 in the first embodiment. Functions and structures different from those in the first embodiment are explained below. Explanation concerning functions and structures same as those in the first embodiment is omitted.

The selecting unit 15A in the first modification selects communicating means referring to information stored in the storing unit 18A besides information concerning a power supply source detected by the detecting unit 14A.

An example of the information stored in the storing unit 18A is explained with reference to FIG. 9. FIG. 9 is a diagram of an example of a condition table stored by the storing unit 18A of the home electric appliance control apparatus 10A according to the first modification. As shown in FIG. 9, "supply source", "selection condition", and "selection target" are stored in the condition table in association with "condition ID (Identifier)" for uniquely specifying conditions. For example, a supply source "external (which means the external power transmission network 80)", a selection condition "none", and a selection target "1 (which means the first communication unit 11A)" are stored in association with a condition ID "01". A condition specified by the condition ID "01" means that, if the power supply source is the external power transmission network 80, there is no particular condition and the first communication unit 11A is selected. A supply source "storage battery", a selection condition "solar power generation is larger than consumption", and a selection target "1" are stored in association with a condition ID "2". This means that, if the power supply source is the storage battery 30 and the power generation by a solar panel is larger than the power consumption by home electric appliances and the like in the home, the first communication unit 11A is selected rather than the second communication unit 12A even if the power supply source is the storage battery 30. A supply source "storage battery", a selection condition "solar power generation is smaller than consumption", and a selection target "2" are stored in association with a condition ID "03". This means that, if the power supply source is the storage battery 30 and the power generation by the solar panel is smaller than the power consumption by the home electric appliances and the like in the home, it is determined that the power supply source is switched to the storage battery 30 because a failure occurs in the external power transmission network 80, and a communication unit to be selected is switched to the second communication unit 12A.

As explained above, if there are other conditions to be considered in selecting communicating means, the conditions are stored in the storing unit 18A and the selecting unit 15A is caused to select the communicating means, i.e., the first communication unit 11A or the second communication unit 12A referring to the storing unit 18A.

### Effects of the first modification

As explained above, in the first modification, the home electric appliance control apparatus 10A further includes the storing unit 18A that stores the conditions for selecting each of the first communication unit 11A and the second communication unit 12A. The selecting unit 15A selects the first communication unit 11A or the second communication unit 12A referring to the conditions stored in the storing unit 18A. By adopting such a configuration, it is possible to select a communication path from the home electric appliance control apparatus 10A taking into account various situations and take more flexible measures against a change in a power supply status.

### Second Modification

In the first and second embodiments, only one terminal is explained as the terminal 50 accessed by the second communication unit 12. However, the second communication unit 12 may be capable of accessing a plurality of the terminals 50 and establishing connection to the network. For example, information concerning a cellular phone and a personal handy-phone system (PHS) and the priority levels thereof are registered in the home electric appliance control apparatus 10 in advance as information concerning the terminals 50. If the second communication unit 12 is selected, first, the second communication unit 12 may access a terminal having a highest priority level and, if communication may be unable to be established, access a terminal having a second highest priority level.

### Effects of the second modification

As explained above, the second communication unit 12 is capable of transmitting information to the server 70 via the plurality of terminals 50. The plurality of terminals 50 respectively access the server 70 via different communication paths. Consequently, if access to the network may be difficult even by a portable terminal during a large-scale disaster, it is possible to attempt access to the network through a plurality of communication paths, quickly secure a communication path, and transmit information to the server. Consequently, the user can surely refer to the information in the home from outside the home. It is possible to improve reliability of the home electric appliance control system.

As explained above, according to the embodiments, a home electric appliance control apparatus includes a detecting unit that detects whether a power supply source that supplies electric power to a home is an external power transmission network or a backup power supply, a first communication unit that accesses an external network via a network connecting apparatus that receives power supply from the external power transmission network, a second communication unit that accesses the external network via a terminal that can operate without receiving the power supply from the external power transmission network, a selecting unit that selects the first communication unit if the power supply source detected by the detecting unit is the external power transmission network and selects the second communication unit if the power supply source detected by the detecting unit is the backup power supply, and a control unit that controls the first communication unit or the second communication unit selected by the selecting unit to transmit home electric appliance information in the home to a server. Consequently, even if the external power transmission network may be unable to be used because of a power failure or the like, it is possible to transmit the information concerning home electric appliances in the home to the external server.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A home electric appliance control apparatus (10) that communicates with a server (70) that manages information about electric appliances in the home, comprising:
a detecting unit (14) configured to detect whether a power supply source that supplies power to the electric appliances in the home is an external power transmission network (80) or a backup power supply (30);
a first communication unit (11) configured to access an external network via a network connecting apparatus (60) that receives power from the external power transmission network (80);
a second communication unit (12) configured to access the external network via a terminal that can operate without receiving the power from the external power transmission network;
a selecting unit (15) configured to select the first communication unit or the second communication unit according to the power supply source detected by the detecting unit; and
a control unit (17) configured to control the first communication unit or the second communication unit as selected by the selecting unit to transmit information about one or more of the home electric appliances to the server (70).

2. The apparatus according to claim 1, wherein the selecting unit is configured to select the first communication unit (11) when the power supply source detected by the detecting unit is the external power transmission network, and select the second communication unit (12) when the power supply source detected by the detecting unit is the backup power supply.

3. The apparatus according to claim 1, wherein the selecting unit (15) is configure to select the first communication unit (11) when the power supply source detected by the detecting unit (14) is the backup power supply (30) and access to the external network via the network connecting apparatus (60) succeeds, and select the second communication unit (12) when the power supply source detected by the detecting unit (14) is the backup power supply (30) and access to the external network via the network connecting apparatus (60) fails.

4. The apparatus according to any one of claims 1 to 3, further comprising a storing unit (18A) configured to store conditions for selecting each of the first communication unit (11A) and the second communication unit (12A),
wherein the selecting unit (15A) is configured to select, when the power supply source detected by the detecting unit (14A) is the backup power supply (30), the first communication unit (11A) or the second communication unit (12A) according to the conditions stored in the storing unit (18A).

5. The apparatus according to any one of claims 1 to 4, wherein
the second communication unit (12) is configured to communicate with a plurality of terminals that respectively access the server (70) via different communication paths, and
the control unit (17) is configured to control the second communication unit (12) to access the server (70) via one of the plurality of terminals.

6. The apparatus according to claim 5, further comprising a storing unit configured to store priority levels of the plurality of terminals that communicate with the second communication unit (12),
wherein the second communication unit (12) is configured to access the server (70) via a terminal having a highest priority level among the plurality of terminals and, when the access to the server via the terminal fails, to access the server (70) via a terminal having a next highest priority level.

7. The apparatus according to any one of claims 1 to 6, wherein the control unit (17) is configured to control the second communication unit (12) to maintain communication connection as long as the power supply source detected by the detecting unit (14) is the backup power supply (30).

8. The apparatus according to any one of claims 1 to 7, wherein, when the power supply source detected by the detecting unit (14) is the backup power supply (30), the control unit (17) controls the second communication unit (12) to transmit to the server, information indicating that the power supply from the external power transmission network (80) is stopped.

9. A home electric appliance control system (100) comprising:
a home electric appliance control apparatus (10) according to any one of claims 1 to 7;
the server (70) set outside the home and configured to receive information concerning the home electric appliances from the home electric appliance control apparatus and manage the information; and
the network connecting apparatus (60) configured to receive power from an external power transmission network (80) and establish connection between the home electric appliance control apparatus (10) and the server (70).

10. A home electric appliance control method comprising:
detecting whether a power supply source that supplies power to a home is an external power transmission network or a backup power supply (S401, S402);
selecting a first communication unit configured to access an external network via a network connecting apparatus that receives power from the external power transmission network (S403) or a second communication unit configured to access the external network via a terminal that can operate without receiving the power from the external power transmission network (S404) according to the detected power supply source; and
controlling the first communication unit or second communication unit as selected to transmit information about one or more electric appliances in the home to a server that is located outside the home (S405-S407).

11. The home electric appliance control method according to claim 10,
wherein the selecting selects the first communication unit (11) when the power supply source detected in the detecting is the external power transmission network, and selects the second communication unit (12) when the power supply source detected in the detecting is the backup power supply.
